# EUROPEAN PATENT APPLICATION

(11) **EP 1 873 012 A1**
(43) Date of publication of application: **02.01.2008**
(21) Application number: 07011299.0
(22) Date of filing: 08.06.2007
(51) Int. Cl.: B60Q 1/26, F21V 31/04

(54) **Trailer lamp assembly**

(30) Priority: 19.06.2006 AU 2006202597
(71) Applicant: Prime Global Brands Ltd., Level 1 1 Cathedral Street Port Louis (MU)
(72) Inventor: Keller, Anthony James, Mordialloc, 3195 Victoria (AU)
(74) Representative: Biehl, Christian

(57) **Abstract**

A trailer lamp assembly has a moulded shell 9 closed by a red and amber lid 3, 4. A pair of raised wells 28 sit beneath the red and amber parts of the lid and each contains a multiple LED array 32 waterproofed by a pool of resin 36. A compartment 15 in the shell between the wells contains a downwardly directed further LED array 25. The incoming electric leads 42 pass through a plug of hardened resin 44 and enter a distributor box 38 likewise waterproofed by a pool of hardened resin 48.

## Description

This invention concerns rear lamp assemblies for trailers and boat trailers.

The assemblies have a metal housing containing filament lamps which connect to the wiring loom of the towing vehicle. The housings are closed by a reflective cover and the assembly provides a red rear light, a stop light and an amber direction flasher.

When the trailer is driven through a creek or is exposed to copious rain, an electrical failure through corrosion or short circuit is probable sooner or later. In cold latitudes, condensation inside the housing eventually causes failure for the same reasons, even if the assembly is sealed. Defective rear lamps are a serious concern to the drivers of towing vehicles.

The problem is exacerbated where the trailer is a boat trailer when immersion in sea water is likely during launch.

The apparatus aspect of the invention provides a rear lamp assembly for a trailer comprising a housing shell with an open top and a continuous sidewall, a transparent red and amber lid closing the top, a pair of receptacles within the housing, a multiple LED array in each receptacle, a current distribution box within the housing, a compartment within the housing lying between the wells and defining a downwardly directed window in the sidewall, an LED array in the compartment for illuminating an area beneath the housing, a transparent cover for the window, the housing defining an incoming electric cable aperture, multiple incoming conductor leads entering the aperture and connecting with the distribution box, conductor leads extending from the current distribution box to the LED arrays, a pool of hardened resin in each receptacle and in the distribution box which waterproofs the LED arrays and the distributor box.

One embodiment of the invention is now described with reference to the accompanying drawings, in which:
Figure 1 is a plan of the lid of the assembly showing the tinted parts and the central reflector.
Figure 2 is a section through the housing.
Figure 3 is a side view of the downwardly facing aspect of the housing.
Figure 4 is a plan of the housing.
Figure 5 is an underneath plan.

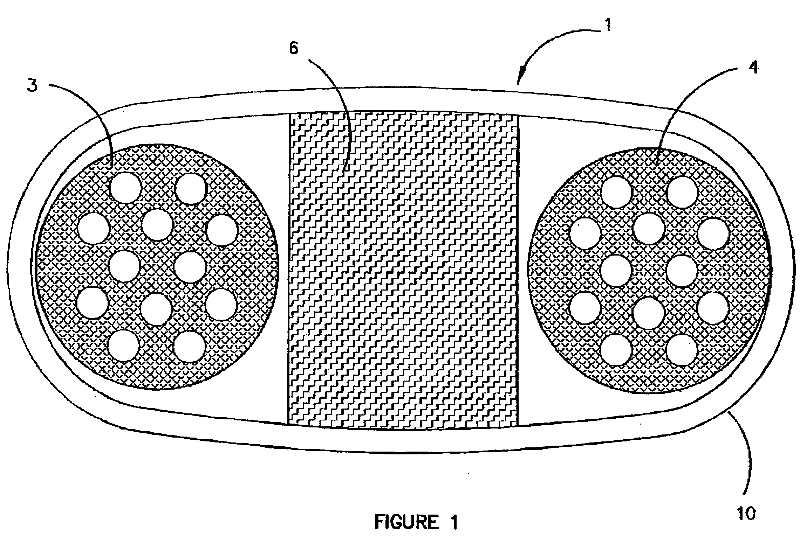

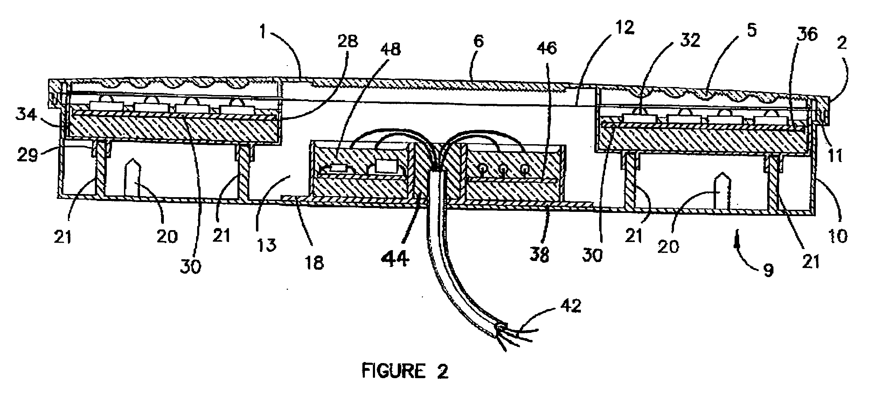

Referring now to Figure 1 and 2, the moulded cover 1 has a perimeter flange 2. The cover is tinted red and has a pair of substantially circular inserts 3, 4. Both inserts have twelve moulded circular lenses 5 in a 23232 array. The inner insert 3 is tinted red and the outer insert 4 is tinted amber. The rectangular area 6 between is rendered reflective to headlights.

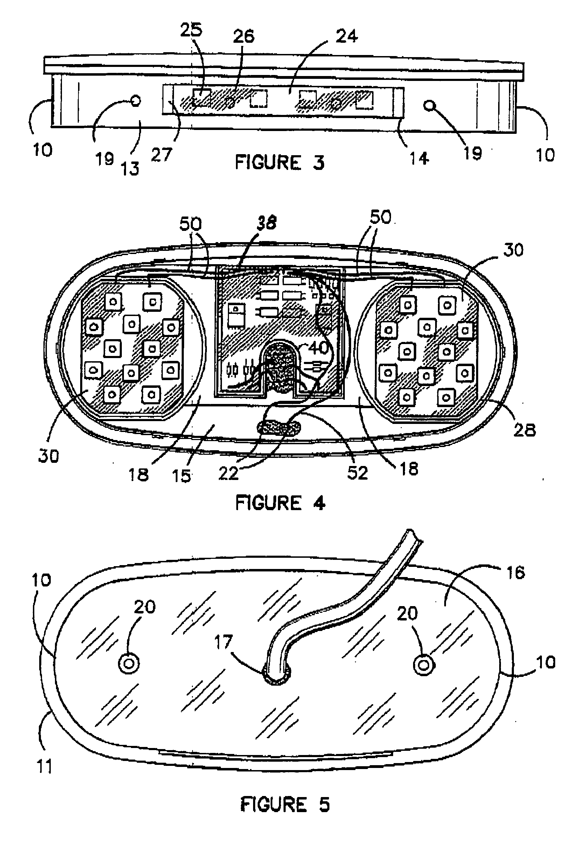

Referring to Figure 3, the housing 9 is a thin-walled shell, 205 x 91 x 30mm. The shell resembles a shallow tray with rounded ends 10. A continuous gutter 11. surrounds top edge 12 of the housing. The sidewall 13 has a rectangular window 14 which opens into a box like compartment 15 which projects into the housing interior. The floor 16 of the housing is flat and is pierced by a cable inlet 17. The floor has a step 18 on both sides of the inlet. The sidewall 13 is pierced by two dram holes 19 which allow gravity to empty the housing of water. Air exchange enables water vapour to escape.

The floor has a pair of tubular screw ways 20, one near each rounded end 10. Close to each screw way is a cluster of four upstanding posts 21 for a purpose to be described later.

The compartment has a pair of round inlets 22 adjacent the centre of window 14. The compartment has a pair of upstanding mounts (not shown) which support a narrow circuit board 24. A row of four LEDs 25 stand on the board 24 in order to direct light onto the tail board of the trailer (not shown). The LED array is protected by a plastic window pane 26 fixed to rebates 27 in the sidewall.

A pair of substantially circular moulded pans 28 have sockets 29 which engage the floor posts 21 and raise the lip of the pan close to the tinted cover. Each pan contains an octagonal circuit board 30 which supports twelve LEDs 32 in a 23232 array so that they register with the twelve lens array of the moulded cover 1. Pins 34 extend from the pan floor and ensure that the LEDs almost touch the lenses. The circuit board is screwed to the pins and the board and pins are immersed in casting resin 36.

A distributor box 38 sits between the steps 18. A U-shaped wall 40 in the box registers with the cable inlet and together with the compartment wall creates a passage for the incoming leads 42 of the cable. The inlet is sealed with a plug of hardened resin 44 and the four leads supply current to a circuit board 46 in the box. The capacitors and resistors of the board 46 are immersed in casting resin which forms a pool 48 in the box. Two leads 50 emerge from the resin to supply the circuit boards 30 for the sets of 12 LEDs. Leads 52 emerge from the resin to enter the compartment inlets to reach the circuit board in the compartment.

We have found the advantages of the above embodiment to be:
1. Immersion in fresh water and salt water does not cause malfunction or deterioration.
2. The circuitry better withstands the effects of vehicle vibration.

## Claims

1. A rear lamp assembly provides a rear lamp assembly for a trailer comprising a housing shell (9) with an open top and a continuous sidewall, a transparent red and amber lid closing the top, a pair of receptacles (28) within the housing, a multiple LED array (32) in each receptacle, **characterized in that**
the assembly further comprises a current distribution box that lies within the housing, a compartment (15) within the housing lying between the receptacles and defining a downwardly directed window (14) in the sidewall, an LED array (25) in the compartment for illuminating an area beneath the housing, a transparent cover (26) for the window, the housing defining an incoming electric cable aperture (17), multiple incoming conductor leads (42) entering the aperture and connecting with the distribution box, conductor leads (50) extending from the current distribution box to the LED arrays, and a pool of hardened resin (36) (48) in each receptacle and in the distribution box which waterproofs the LED arrays and the distributor box.

2. A rear lamp assembly as claimed in Claim 1,
**characterized in that**
the distribution box (38) lies between the receptacles (28).

3. A rear lamp assembly as claimed in Claim 2,
**characterized in that**
the distribution box (38) contains a circuit board (46) bearing electrical components, the board has connectors for the multiple conductor leads, the box at least partially defines a well (40) which registers with the cable aperture (17), the leads pass through the well and the well contains a plug of hardened resin (44),

4. A rear lamp assembly as claimed in Claim 1,
**characterized in that**
the compartment (15) defines electrical lead apertures (22) whereby conductor leads (52) extending from the distribution box to the LED array in the compartment pass through the apertures which are sealed with gap sealant.

5. A rear lamp assembly as claimed in Claim 1,
**characterized in that**
both receptacles contain a circuit board (30) which mounts the LED array and the pool of resin (36) immerses the circuit board but allows the LEDs to protrude.

6. A rear lamp assembly as claimed in Claim 5,
**characterized in that**
the array comprises a regular cluster of 10-12 LEDs (32).

7. A rear lamp assembly as claimed in Claim 5,
**characterized in that**
the receptacles (28) are open-topped pans of lesser depth than the housing depth, each with a rim which is raised so that the rim is substantially level with the open top of the housing shell.

8. A rear lamp assembly as claimed in Claim 7,
**characterized in that**
the pans are supported on the housing by stalks (21).

9. A rear lamp assembly as claimed in Claim 1,
**characterized in that**
the compartment is elongated and accommodates a single row of LEDs (25).

10. A rear lamp assembly as claimed in Claim 1,
**characterized in that**
the housing shell has downwardly facing drain holes (19) in the sidewall beyond the compartment.
